# EUROPÄISCHE PATENTANMELDUNG

(11) **EP 2 510 810 A1**
(43) Veröffentlichungstag der Anmeldung: **17.10.2012**
(21) Anmeldenummer: 11162741.0
(22) Anmeldetag: 15.04.2011
(51) Int. Cl.: A23L 1/10, A23L 1/182

(54) **Verfahren zum Behandeln eines stärkehaltigen Lebensmittels**

(71) Anmelder: Bühler AG, 9240 Uzwil (CH)
(72) Erfinder: Conde-Petit, Béatrice, 8048 Zürich (CH); Nussbaumer, Markus, 9533 Kirchberg (CH)
(74) Vertreter: Hepp Wenger Ryffel AG

(57) **Zusammenfassung**

Das erfindungsgemässe Verfahren zum Behandeln eines stärkehaltigen Lebensmittels umfasst einen Schritt zur Bereitstellung eines stärkehaltigen Lebensmittels mit einem Anfangs-Feuchtegehalt im Bereich von 20% wb bis 35 % wb. Während des Verfahrens durchläuft das stärkehaltige Lebensmittel Zustände an der Oberfläche, die verschiedene Wertepaare aus Temperatur der Oberfläche und Feuchtigkeit der Oberfläche aufweisen. Anschliessend erfolgt ein Temperieren des stärkehaltigen Lebensmittels, so dass ein Gelatinisierungsgrad von zumindest 75% erreicht wird. Daraufhin erfolgt ein Abkühlen zumindest eines Teils der Oberfläche des temperierten, stärkehaltigen Lebensmittels auf eine Temperatur T, die unter der Temperatur T_{g mittel} der Glasübergangskurve bezogen auf die Feuchtigkeit des stärkehaltigen Lebensmittels liegt. Anschliessend erfolgt ein Trocknen des abgekühlten, stärkehaltigen Lebensmittels bei einer Temperatur T, die über der Temperatur T_{g onset} der Glasübergangskurve bezogen auf die Feuchtigkeit des stärkehaltigen Lebensmittels liegt.

## Beschreibung

Die Erfindung betrifft ein Verfahren zum Behandeln eines stärkehaltigen Lebensmittels sowie ein schnellkochbares, stärkehaltiges Lebensmittel gemäss den Oberbegriffen der unabhängigen Ansprüche.

Stärkehaltige Lebensmittel und insbesondere Griess und / oder Mehl daraus sind in vielen Teilen der Welt ein Grundnahrungsmittel, welche oft zur Herstellung eines zubereiteten Lebensmittels verwendet werden. Beispielsweise wird häufig aus Maisgriess oder auch Maismehl ein Lebensmittel durch Kochen zubereitet.

Dies hat jedoch den Nachteil einer langen Kochzeit von über 25 min, welche für viele Konsumenten heutzutage nicht mehr akzeptabel ist.

Weiterhin ist es bekannt, schneller kochende, stärkehaltige Lebensmittel mittels Kochextrusion in einem Doppelschneckenextruder oder mittels Trommel-Trocknung herzustellen (T.F. Schweizer et al., Journal of Cereal Science 4 (1986) 193-203 sowie P.Colonna et al., Cereal Chem. 61(6): 538-543).

Diese Verfahren haben jedoch den Nachteil, dass das damit hergestellte stärkehaltige Lebensmittel zumindest bezüglich Textur und Konsistenz wie beispielsweise der Viskosität des gekochten Produkts nicht den aus traditionellen, nicht weiter behandelten, stärkehaltigen Lebensmitteln entsprechen.

Es ist daher eine Aufgabe der vorliegenden Erfindung, die Nachteile des Bekannten zu vermeiden und insbesondere ein Verfahren zum Behandeln von stärkehaltigen Lebensmitteln sowie ein schnellkochbares, stärkehaltiges Lebensmittel bereitzustellen, zur Erzielung einer kurzen Kochzeit bei gleichzeitig möglichst guter Übereinstimmung im Hinblick auf Textur und Konsistenz im Vergleich zu traditionellen Produkten.

Diese Aufgabe wird erfindungsgemäss mit dem Verfahren und dem schnellkochbaren, stärkehaltigen Lebensmittel gemäss den unabhängigen Patentansprüchen gelöst.

Das erfindungsgemässe Verfahren zum Behandeln eines stärkehaltigen Lebensmittels umfasst einen Schritt zur Bereitstellung eines stärkehaltigen Lebensmittels mit einem Anfangs-Feuchtegehalt im Bereich von 20% wb bis 35 % wb. Bevorzugt liegt der Anfangs-Feuchtegehalt im Bereich von 21% wb bis 30 % wb und besonders bevorzugt von 22% wb bis 25 % wb. Das Verfahren wird insbesondere für Cerealien und Pseudoceralien sowie beliebige Kombinationen daraus verwendet. Während des Verfahrens durchläuft das stärkehaltige Lebensmittel Zustände an der Oberfläche, die verschiedene Wertepaare aus Temperatur der Oberfläche und Feuchtigkeit der Oberfläche aufweisen.

Anschliessend erfolgt ein Temperieren des stärkehaltigen Lebensmittels, so dass ein Gelatinisierungsgrad von zumindest 75% erreicht wird. Bevorzugt wird ein Gelatinisierungsgrad von zumindest 80% und besonders bevorzugt im Bereich von 85% bis 99% erreicht. Insbesondere wird das Temperieren bei einer Temperatur T über der Temperatur T_{g} end der Glasübergangskurve bezogen auf die Feuchtigkeit des stärkehaltigen Lebensmittels durchgeführt.

Daraufhin erfolgt ein Abkühlen zumindest eines Teils der Oberfläche des temperierten, stärkehaltigen Lebensmittels auf eine Temperatur T, die unter der Temperatur T_{g mittel} der Glasübergangskurve bezogen auf die Feuchtigkeit des stärkehaltigen Lebensmittels liegt. Insbesondere erfolgt ein Abkühlen der gesamten Oberfläche. Die Abkühlung erfolgt für eine Dauer im Bereich von 1 min bis 4 min, insbesondere von 1 min bis 2 min.

Anschliessend erfolgt ein Trocknen des abgekühlten, stärkehaltigen Lebensmittels bei einer Temperatur T, die über der Temperatur T_{g onset} der Glasübergangskurve bezogen auf die Feuchtigkeit des stärkehaltigen Lebensmittels liegt. Bevorzugt liegt die Temperatur T zwischen der Temperatur T_{g onset} und der Temperatur T_{g end}. Insbesondere erfolgt das Trocknen auf eine Endfeuchte im Bereich von 10% wb bis 14 % wb, bevorzugt von 10% wb bis 12 % wb.

Unter einem Feuchtegehalt von beispielsweise "20 % wb" wird im Sinne der vorliegenden Anmeldung ein Feuchtegehalt in Gewichtsprozent bezogen auf das feuchte Gewicht (wet basis) verstanden.

"Cerealien" werden im Sinne der vorliegenden Anmeldung als kultivierte Pflanzen der botanischen Familie der Süssgräser verstanden; insbesondere sind Weizen, Roggen, Hafer, Gerste, Reis, Hirse und Mais Ceralien im Sinne der vorliegenden Anmeldung.

Unter "Pseudocerealien" werden im Sinne der vorliegenden Anmeldung getreideähnliche Körnerfrüchte verstanden, die botanisch jedoch keine Gräser sind. Im Unterschied zu Cerealien besitzen sie kein Gluten. Pseudocerealien im Sinne der vorliegenden Anmeldung sind unter anderem Buchweizen, Amarant und Quinoa verstanden.

Die Bestimmung des Gelatinisierungsgrades, d.h. des Verkleisterungsgrades, erfolgt mittels dem Fachmann bekannter DSC-Messungen ("Differential Scanning Calorimetry"). Hierzu wird die gelatinisierte Probe vermahlen auf eine Partikelgrösse kleiner 200 µm und mit Wasser vermischt bis zu einem Feuchtegehalt von 65 % wb. Anschliessend wird das Produkt in der DSC-Vorrichtung von 10°C auf 100°C mit einer Rate von 10°C pro Minute erwärmt und die Schmelzentalpie im Bereich zwischen 55 und 85 °C ausgewertet und mit der Schmelzenthalpie des rohen, d.h. nichtgelatinisierten Produkt verglichen.

Unter dem Begriff "Partikelgrösse" eines Partikels wird im Sinne der vorliegenden Anmeldung die grösste Längsausdehnung des Partikels verstanden.

Die Bestimmung der Glasübergangskurve eines stärkehaltigen Lebensmittels erfolgt mittels einer rheologischen Messung, wie bspw. mit dem "Phase Transition Analyzer" nach dem in der Veröffentlichung Brian Plattner et al. beschriebenen Verfahren (The Society for engineering in agricultural, food and biological systems, Paper Number: 01-6067, An ASEA Meeting Presentation: The Phase Transition Analyzer and its Impact on Extrusion Processing of Foodstuffs). Analysiert wird hierbei das gesamte Lebensmittel (also bspw. das Maismehl). Gemäss diesem Verfahren wird eine Glasübergangskurve bestimmt, die für eine definierte Feuchtigkeit U1 jeweils ein erstes Paar (U1, T_{g onset}) und ein zweites Paar (U1, T_{g end}) aus Feuchtigkeit und Temperatur bestimmt. Diese beiden Temperaturen definieren einen Glasübergangsbereich bei der Feuchte U1. Eine dritte, zwischen diesen liegende Temperatur ist der arithmetische Mittelwert für das Paar (U1, T_{g mittel}) .

Bei einem Temperatur-Feuchte Paar (U1, T) eines stärkehaltigen Lebensmittels bezogen auf das Temperatur-Feuchte Paar (U1, T_{g end}) befindet sich das Lebensmittel in einem gummiartigen Zustand, wenn T > T_{g end.} Bei einem Temperatur-Feuchte Paar (U1, T) eines stärkehaltigen Lebensmittels bezogen auf das Temperatur-Feuchte Paar (U1, T_{g onset}) befindet sich das Lebensmittel in einem glasartigen Zustand, wenn T < T_{g onset}.

Das erfindungsgemässe Verfahren weist nun den Vorteil auf, dass während des Abkühlungsschritts das stärkehaltige Lebensmittel insbesondere bereits getrocknet wird, aber vor allem zumindest teilweise in einen glasartigen Zustand überführt (und darin während der weiteren Trocknung möglichst gehalten) wird. Obschon die auftretenden Phänomene nicht abschliessend geklärt sind, wird derzeit vermutet, dass das Wasser aus dem rigiden, glasartigen Gitter ausgetrieben wird und Leerstellen hinterlässt, was zu einer besseren Wasseraufnahmefähigkeit ("Hydratisierbarkeit") beispielsweise beim späteren Kochen des getrockneten, stärkehaltigen Lebensmittels führt; dies wiederum führt zu einer Textur und Konsistenz des Lebensmittels, die sehr ähnlich zu traditionellen Produkten ist, was vom Konsumenten gewünscht wird. Auch kann trotz einer an die erste Abkühlung anschliessende Trocknung bei höheren Temperaturen ein Härten und Verschliessen der Oberfläche (sogenanntes "case hardening") vermieden werden.

Zudem hat das Verfahren den weiteren Vorteil, dass der Abkühlungsschritt ähnlich wie die so genannte Gefriertrocknung wirkt, ohne jedoch das Lebensmittelprodukt unter den Gefrierpunkt von Wasser bei Umgebungsdruck abkühlen zu müssen, was die Trocknung beschleunigt und den Energiebedarf senkt.

Bevorzugt weist das stärkehaltige Lebensmittel während des Temperierens zumindest für 80% und bevorzugt für zumindest 90% der Dauer die Temperatur T über der Temperatur T_{g end} auf.

Insbesondere wird das stärkehaltige Lebensmittel für eine Dauer von 15 min bis 120 min temperiert, bevorzugt von 50 min bis 70 min.

Kurzzeitige Abweichungen unter die Temperatur T_{g end} haben erfahrungsgemäss keine nachteiligen Auswirkungen auf den Temperierungsprozess oder die nachfolgenden Prozessschritte.

Besonders bevorzugt erfolgt das Temperieren des stärkehaltigen Lebensmittels bei einer Temperatur T höchstens von 70 und 120 °C, bevorzugt zwischen 80 und 100 °C und besonders bevorzugt zwischen 90 und 95°C.

Dies hat den Vorteil, dass der gewünschte Gelatinisierungsgrad erreicht wird bei gleichzeitig weitgehender Erhaltung der Nährstoffe im temperierten, stärkehaltigen Lebensmittel, welche nicht durch zu hohe Temperaturen abgebaut werden.

Ganz besonders bevorzugt weist während des Trocknens das abgekühlte, stärkehaltige Lebensmittel zumindest für 80% und bevorzugt für zumindest 90% der Dauer die Temperatur T über der Temperatur (T_{g onset}) auf.

Kurzzeitige Abweichungen unter die Temperatur T_{g onset} haben erfahrungsgemäss keine nachteiligen Auswirkungen auf den Trocknungsprozess oder die nachfolgenden Prozessschritte.

Unter der "Dauer" wird hierbei jeweils die benötigte Zeit bis zum Erreichen der gewünschten Endfeuchte verstanden.

Bevorzugt wird das temperierte, stärkehaltige Lebensmittel vor dem Abkühlen flockiert und/oder gesiebt, insbesondere flockiert auf eine Dicke im Bereich von 0.25 mm bis 1.50 mm, bevorzugt von 0.4 mm bis 0.6 mm.

Unter "Dicke" wird hierbei die kleinste Längsausdehnung des Partikels verstanden.

Unter "Flockieren" wird von hier ab und im Folgenden ein Quetschen mit beispielsweise einem Walzenstuhl verstanden zur Bildung von flockenförmigen Partikeln.

Zudem hat die Flockierung den Vorteil, dass das Verhältnis von Oberfläche zu Volumen der Flocken vergrössert wird, so dass die anschliessende Abkühlung und/oder Trocknung effizienter erfolgen kann.

Besonders bevorzugt umfasst der Schritt des Bereitstellens des stärkehaltigen Lebensmittels ein Konditionieren auf die gewünschte Anfangs-Feuchte.

Unter "Konditionieren" wird hierbei das möglichst gleichmässige Einstellen eines definierten Feuchtegehalts verstanden.

Ganz besonders bevorzugt wird das stärkehaltige Lebensmittel vor dem Bereitstellen zumindest mittels einem der folgenden Verfahren oder beliebige Kombinationen daraus behandelt: Reinigen, Schälen, Entkeimen, Zerkleinern.

Dies hat den Vorteil, dass von dem stärkehaltigen Lebensmittel unerwünschte Komponenten wie Schalen, Verunreinigungen oder auch Umweltgifte vor der weiteren Verarbeitung entfernbar sind. Zudem kann vorteilhaft mittels Zerkleinern eine definierte Partikelgrösse bzw. Partikelgrössenverteilung eingestellt werden, so dass zumindest der Temperierungsschritt effizient durchführbar ist.

Bevorzugt werden dem stärkehaltigen Lebensmittel vor dem Temperieren zumindest ein Additiv, insbesondere zumindest ein Emulgator, ein Enzym oder beliebige Kombinationen daraus, zugemischt. Als Emulgatoren kommen insbesondere Lecithin, Mono- und Diglyceride sowie lebensmittelverträgliche Derivate der Mono- und Diglyderide in Frage. Geeignete Enzyme sind Xylanasen, Hemicellulasen, Amylasen, Lipasen, Proteasen oder Transglutaminasen. Dies hat den Vorteil, dass die Eigenschaften des stärkehaltigen Lebensmittels an das entsprechende Behandlungsverfahren anpassbar sind.

Als Additive eignen sich beispielsweise Emulgatoren zur Einstellung verschiedener Eigenschaften wie der Viskosität, Klebrigkeit, Gelformation oder auch der Abbaubarkeit von Enzymen. Insbesondere werden Emulgatoren mit einem Anteil im Bereich von 0.25% bis 1% bezogen auf das stärkehaltige Lebensmittel zugemischt.

Besonders bevorzugt werden dem getrockneten, stärkehaltigen Lebensmittel zumindest ein Nährstoff, ein Protein, Stärke oder beliebige Kombinationen daraus zugemischt.

Insbesondere kann Stärke mit einem Anteil im Bereich von 2% bis 5% bezogen auf das stärkehaltige Lebensmittel zugemischt werden. Insbesondere können proteinhaltige Mehle wie beispielsweise aus Soja oder auch angereicherte Mehle aus Hülsenfrüchten mit einem Anteil im Bereich von 6% bis 12% bezogen auf das stärkehaltige Lebensmittel zugemischt werden.

Dies hat den Vorteil, dass dem Endprodukt zusätzliche Nährstoffe wie beispielsweise Vitamine oder Mineralien bei Bedarf zugemischt werden können.

Das Zumischen von Stärke hat den Vorteil, das unter anderem die Viskosität und / oder die Textur des Produkts an gewünschte Eigenschaften anpassbar ist.

Das Zumischen von proteinhaltigen Mehlen wie beispielsweise aus Soja oder auch angereicherten Mehlen aus Hülsenfrüchten hat den Vorteil, dass der Nährwert anpassbar ist.

Ganz besonders bevorzugt wird das getrocknete, stärkehaltige Lebensmittel zu Griess und / oder Mehl vermahlen und optional gesiebt, insbesondere zur Einstellung einer mittleren Grössenverteilung der Partikel, bevorzugt einer mittleren Grösse von grösser 200 µm, besonders bevorzugt im Bereich von 400 µm bis 500 µm.

Dies hat den Vorteil, dass die Partikelgrössenverteilung entsprechend dem Zweck der Weiterverarbeitung des getrockneten, stärkehaltigen Lebensmittels einstellbar ist.

Unter der "mittleren Grössenverteilung" wird der Mittelwert der Partikelgrössen verstanden.

Ein weiterer Aspekt der vorliegenden Erfindung ist gerichtet auf ein schnellkochbares, stärkehaltiges Lebensmittel, welches mittels eines Verfahrens wie oben herstellbar und insbesondere hergestellt ist.

Noch ein weiterer Aspekt der vorliegenden Erfindung ist gerichtet auf ein schnellkochbares, stärkehaltiges Lebensmittel wie oben beschrieben mit einer Kochzeit von kleiner als 4 min zur Erzielung eines Gelstabilitätsindex grösser 100 g, bevorzugt grösser 150 g, besonders bevorzugt grösser 200 g und ganz besonders bevorzugt grösser 250 g erzielt wird. Bevorzugt ist die Kochzeit kleiner als 2 min.

Die Bestimmung des Gelstabilitätsindex des schnellkochbaren, stärkehaltigen Lebensmittels erfolgt wie folgt: Vermischen von 20 g eines stärkehaltigen Lebensmittels mit einer Feuchte von 10 % wb mit 180 ml kochendem Wasser für eine Kochzeit von zwei Minuten; überschüssiges Wasser wird nicht entfernt, da die eingesetzte Menge komplett aufgesogen wird. Anschliessend wird die hierbei entstehende Paste in einen Zylinder mit einem Durchmesser von 3 cm und einer Höhe von 2 cm gefüllt, wobei der Zylinder vollständig gefüllt wird. Anschliessend wird der Zylinder verschlossen und bei ca. 5° C für 20 bis 24 Stunden gelagert. Für die Messung wird die Paste auf eine Temperatur von 10° C ± 2° C temperiert. Die gelierte Paste wird anschliessend aus dem Zylinder entfernt und mittels eines Kolbens mit einem Durchmesser von 5 cm komprimiert, wobei der Kolben mit einer Geschwindigkeit von 1 mm / s bewegt wird. Die Kraft zur Kompression um 6.25 mm sowie um 7 mm der Paste entlang der Zylinderachse wird in Gramm gemessen, wobei die Kompression bei 7 mm beendet und gehalten wird. Die Kompression um 6.25 mm entspricht einer Kraft F1 in Gramm und um 7 mm einer Kraft F2 in Gramm. Nach dem Erreichen der Kompression um 7 mm wird die Kraft zur Erzielung dieser Kompression nach 30 Sekunden erneut gemessen, was einer Kraft F3 entspricht.

Der Gelstabilitätsindex für traditionellen Maisgriess oder auch traditionelles Maismehl wird hingegen mit einer Kochzeit von 30 min bestimmt, wobei die weiteren Schritte zur Bestimmung des Gelstabilitätsindex identisch zu den vorstehend beschriebenen Schritten sind.

Eine Festigkeit F ist wie folgt definiert: F = F1 in g. Eine Elastizität ist wie folgt definiert: E = F3 / F2 * 100 in %. Der Gelstabilitätsindex ist wie folgt definiert: G = F * E / 100 in g.

Die Erreichung des Gelstabilitätsindex von zumindest grösser 100 g hat den Vorteil, dass das schnellkochbare, stärkehaltige Lebensmittel eine ähnliche Konsistenz wie ein traditionell hergestelltes Produkt aufweist, welches jedoch für 30 min gekocht werden muss.

Traditioneller Maisgriess oder auch traditionelles Maismehl weist beispielsweise einen Gelstabilitätsindex von 280 g auf nach einer Kochzeit von 30 min. Der Gelstabilitätsindex des schnellkochbaren, stärkehaltigen Lebensmittels gemäss der Erfindung, welches aus dem gleichen Mais hergestellt wurde, weist einen ähnlichen Gelstabilitätsindex von 282 g auf, insbesondere bei einer mittleren Grössenverteilung der Partikel im Bereich von 400 µm bis 500 µm. Ein mittels Extrusionsverfahren aus dem Stand der Technik hergestelltes schnellkochbares, stärkehaltiges Lebensmittel weist hingegen lediglich einen Gelstabilitätsindex von 25 g nach einer Kochzeit von zwei Minuten auf.

Bevorzugt weist das Lebensmittel eine Viskosität von grösser 3200 cPoise, bevorzugt grösser 6000 cPoise und besonders bevorzugt grösser 8000 cPoise, insbesondere bei einer mittleren Grössenverteilung der Partikel im Bereich von 400 µm bis 500 µm.

Diese End-Viskosität von zumindest 3200 cPoise hat den Vorteil, dass die Konsistenz und Textur für den Konsumenten im Wesentlichen dem traditionellen Produkt entspricht.

Die Bestimmung der Viskosität erfolgt wie folgt mittels eines Rapid Viscoanalyzer (RVA) der Firma Newport Scientific: 3.5 g Maismehl mit einer Feuchte von 12 % wb werden mit 25 ml Wasser gemischt bei einer Temperatur von 25° C in dem RVA-Behälter. Anschliessend wird das Gemisch auf 95°C innerhalb von 5 min erwärmt und auf dieser Temperatur für 3 min gehalten. Anschliessend wird das Gemisch auf 25° C innerhalb von 5 min abgekühlt. Die End-Viskosität entspricht dabei der am Ende gemessenen Viskosität nach dem Abkühlen.

Ein weiterer Aspekt der vorliegenden Erfindung ist gerichtet auf die Verwendung eines schnellkochbaren, stärkehaltigen Lebensmittels wie oben beschrieben zur Herstellung eines abgepackten Lebensmittelprodukts.

Die Erfindung wird nachfolgend anhand von Ausführungsbeispielen zum besseren Verständnis näher erläutert. Es zeigen:
- Fig. 1:: Temperatur/Feuchtigkeitsdiagramm von Zuständen, die beim erfindungsgemässen Verfahren durchlaufen werden;
- Fig. 2:: Illustration zur Ermittlung der Kräfte F1, F2 und F3, die für die Ermittlung der Festigkeit, Elastizität und des Gelstabilitätsindex herangezogen werden;
- Fig. 3:: Vergleich der äusserlichen Erscheinung von traditionell gekochtem Maisgriess(links) und einem gekochten Lebensmittelprodukt gemäss der Erfindung;

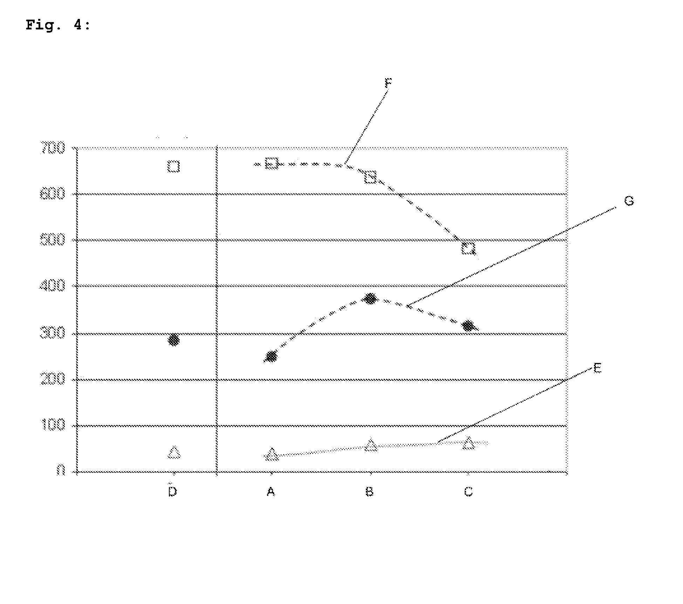

- Fig. 4:: Geleigenschaften und Viskosität von gekochten Lebensmittelprodukten gemäss der Erfindung, in Abhängigkeit von der Partikelgrösse;
- Fig. 5-7:: Ablaufschemata diverser Verfahrensvarianten gemäss der Erfindung.

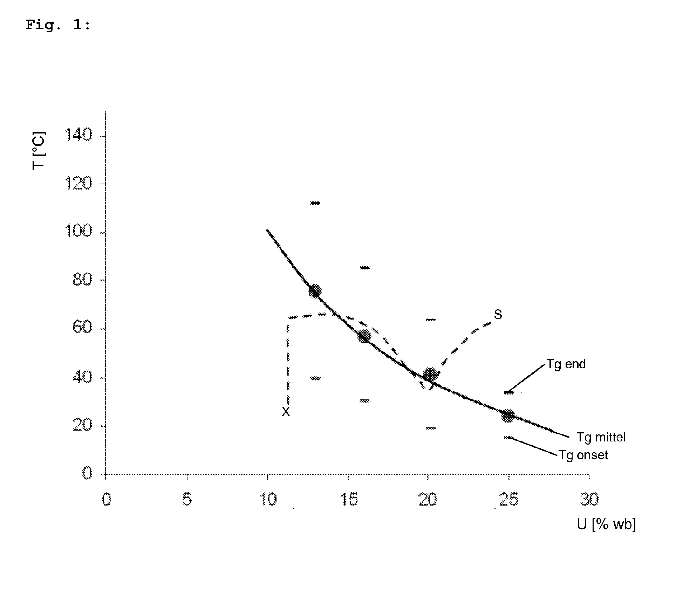

In Figur 1 ist ein Temperatur/Feuchtigkeitsdiagramm von Zuständen gezeigt, die beim erfindungsgemässen Verfahren durchlaufen werden. Auf der Ordinate ist die Temperatur des Lebensmittels in °C aufgetragen; auf der Abszisse ist der Feuchtigkeitsgehalt in Gew.% (bezogen auf die feuchte Masse, also wet-base "wb") aufgetragen. Die Glasübergangstemperaturen T_{g onset} und T_{g end} werden gemäss dem von Brian Plattner et al. beschriebenen Verfahren (The Society for engineering in agricultural, food and biological systems, Paper Number: 01-6067, An ASEA Meeting Presentation: The Phase Transition Analyzer and its Impact on Extrusion Processing of Foodstuffs) bestimmt; hierbei entspricht T_{g onset} dem von Plattner et al. als T_{g initial} beschriebenen Wert. Für eine definierte Feuchtigkeit U ist jeweils ein erstes Paar (U, T_{g onset}) und ein zweites Paar (U, T_{g end}) aus Feuchtigkeit und Temperatur bestimmt, wobei die Wertepaare den Anfangs- bzw. den Endpunkt des Glasübergangsbereichs definieren. Wiederholung der Bestimmung bei anderen Feuchtigkeiten U ergibt einen Glasübergangsbereich in dem in Fig. 1 gezeigten Graphen, der zwischen den (nicht durchgezeichneten) Kurven T_{g onset} und T_{g end} liegt. Eine dritte, zwischen diesen beiden Kurven liegende Temperatur/Feuchtigkeitskurve ist der Mittelwert aus T_{g onset} und T_{g end,} also T_{g mittel}).

In dem Ausführungsbeispiel handelt es sich um Mais, der bei einer Temperatur, die oberhalb der Kurve T_{g end} liegt, temperiert wird (hier bei > 60°C) ; symbolisch dargestellt mit S (Startpunkt). Anschliessend erfolgt ein Abkühlen (hier unter gleichzeitiger Trocknung, also Reduzierung der Feuchtigkeit U, auf eine Temperatur, die unterhalb von T_{g mittel} liegt (hier: etwa 35°C). Anschliessend erfolgt eine weitere Trocknung, bei der Temperatur/Feuchtigkeitswertepaare durchlaufen werden, die sich möglichst im durch den Zwischenbereich zwischen T_{g onset} und T_{g end} definierten Glasübergangsbereich befinden. Hierbei ist es möglich, dass die Temperatur/Feuchtigkeitswertepaare sich ober- oder auch unterhalb von T_{g mittel} befinden. Ersichtlich ist, dass eine Trocknung bei geringerer Temperatur eine Verlängerung der benötigten Zeit ergibt, die für ein ansonsten vergleichbares Trocknungsergebnis benötigt würde. In der Praxis wird daher oftmals ein wesentlicher Teil der Trocknung im Bereich zwischen T_{g mittel} und T_{g end} stattfinden, wodurch ein guter Kompromiss aus Wirtschaftlichkeit und akzeptablem Produkt erzielbar ist. Sobald die gewünschte Endfeuchtigkeit erreicht ist (oder bereits kurz davor), wir das Produkt abgekühlt; symbolisch dargestellt mit X (Endpunkt).

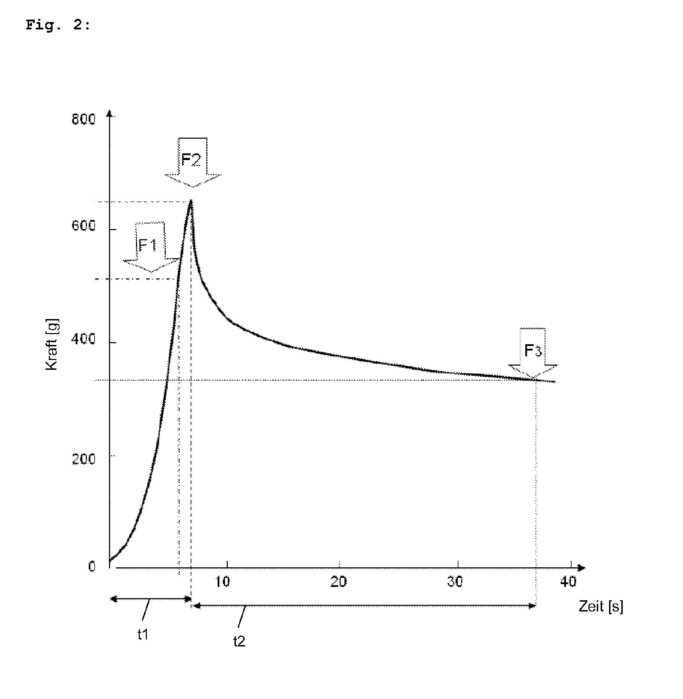

In Fig. 2 ist das im Rahmen der Erfindung angewandte Verfahren zur Ermittlung der Messwerte illustriert, die für die Berechnung der Festigkeit und Elastizität sowie des Gelstabilitätsindex erforderlich sind. Die wie vorstehend beschriebene Paste wird wie bereits beschrieben komprimiert, wobei der Kolben mit einer Geschwindigkeit von 1 mm / s bewegt wird. Die Kraft (in g) zur Kompression um eine erste Strecke wird als F1 bezeichnet. Erfindungsgemäss ist diese erste Strecke 6.25 mm lang. Die Kraft (in g) zur Kompression um eine zweite Strecke, die länger ist als die erste Strecke, wird als F2 bezeichnet. Erfindungsgemäss ist diese zweite Strecke 7 mm lang. Die Zeit bis zum Erreichen dieser zweiten Kompression wird als t2 bezeichnet. Die Kompression wird anschliessend bei 7 mm beendet und gehalten. Nach dem Erreichen der Kompression um 7 mm wird die Kraft zur Erzielung dieser Kompression nach weiteren 30 Sekunden (t2) erneut gemessen, was einer Kraft F3 entspricht.

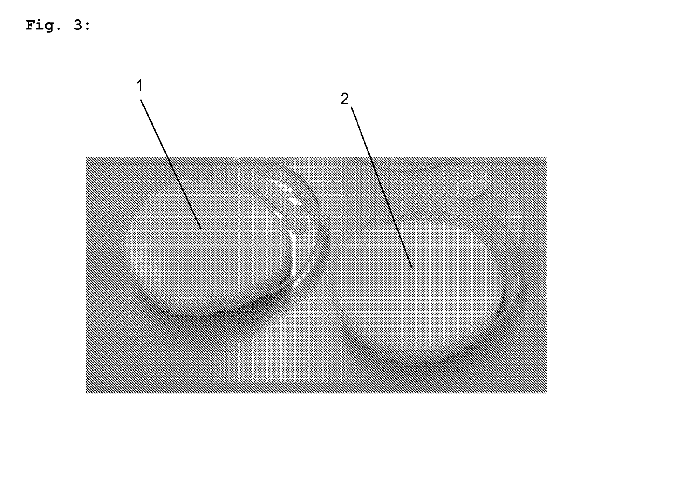

In Figur 3 sind die Eigenschaften eines gekochten, stärkehaltigen Lebensmittels gemäss der Erfindung illustriert, nämlich von gekochtem, erfindungsgemäss hergestelltem Maismehl (rechts, 2) im Vergleich zu traditionellem, gekochtem Maismehl (links, 1). Die optische Beschaffenheit und die Textur sind vergleichbar.

Die folgenden Messwerte wurden erhalten:

### Beispiel 1

Geleigenschaften von gekochtem, kommerziell erhältlichem Maismehl nach 30 Minuten Kochzeit (Probe 1):

| | |
|---|---|
| Festigkeit (g): | 553 |
| Elastizität (%): | 51 |
| Gelstabilitätsindex: | 280 |

Geleigenschaften von gekochtem, gemäss der Erfindung hergestelltem Maismehl nach 2 Minuten Kochzeit (mit 27.1% Wasser gekocht (wb, nach dem Kochen) mit Maismehl gemäss Probe 1 als Ausgangsstoff):

| | |
|---|---|
| Festigkeit (g): | 660 |
| Elastizität (%): | 43 |
| Gelstabilitätsindex: | 282 |

### Beispiel 2

Geleigenschaften von gekochtem, kommerziell erhältlichem Maismehl nach 30 Minuten Kochzeit (Probe 2):

| | |
|---|---|
| Festigkeit (g): | 443 |
| Elastizität (%): | 44 |
| Gelstabilitätsindex: | 195 |

Geleigenschaften von gekochtem, gemäss der Erfindung hergestelltem Maismehl nach 2 Minuten Kochzeit (mit 25.6% Wasser gekocht (wb, nach dem Kochen) mit Maismehl gemäss Probe 1 als Ausgangsstoff):

| | |
|---|---|
| Festigkeit (g): | 653 |
| Elastizität (%): | 39 |
| Gelstabilitätsindex: | 255 |

### Vergleichsbeispiel

Ein schneller kochendes Maismehl, das mittels Kochextrusion in einem Doppelschneckenextruder hergestellt wurde, wie einleitend beschrieben, wurde nach zwei Minuten Kochzeit vermessen:

| | |
|---|---|
| Festigkeit (g): | 91 |
| Elastizität (%): | 27 |
| Gelstabilitätsindex: | 25 |

Es ist ersichtlich, dass solche Produkte bei weitem nicht mit den von traditionellen Produkten gewohnten und vom Konsumenten erwarteten Eigenschaften vergleichbar sind.

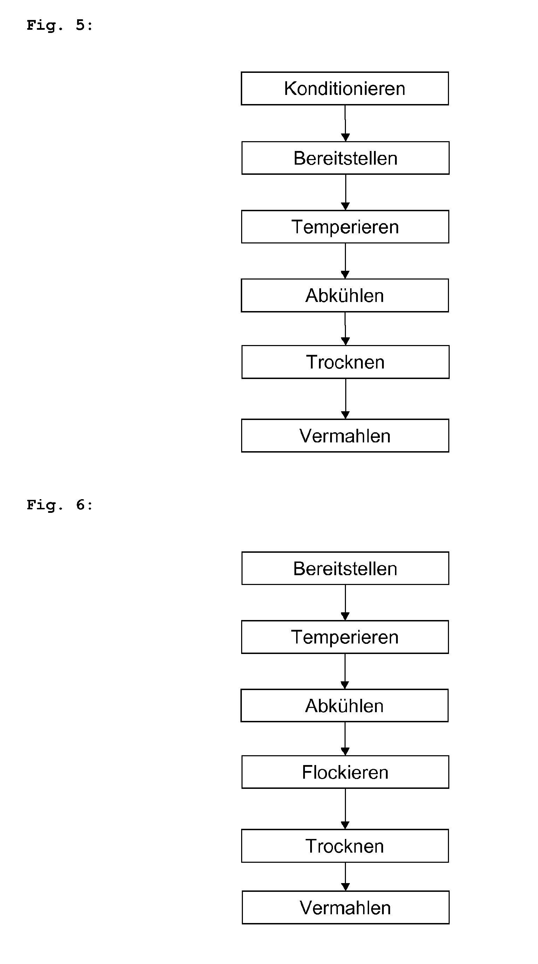

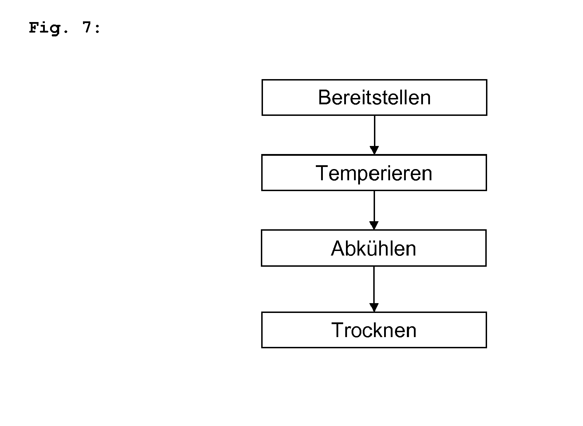

In den Figuren 5, 6 und 7 sind verschiedene Ablaufschemata illustriert, die erfindungsgemässe Verfahren darstellen. Die vorstehend erläuterten und in den Ansprüchen angegebenen Verfahrensschritte sind in diesen Figuren entsprechend bezeichnet. Ersichtlich ist, dass der Schritt des Bereitstellens eines stärkehaltigen Lebensmittels mit einem definierten Anfangs-Feuchtegehalt ein vorgängiges Konditionieren erforderlich machen kann, wie dies in Fig. 5 gezeigt ist. Verfahren zum Konditionieren (hier: homogenes Auffeuchten) von Cerealien und Pseudocerealien sind dem Fachmann ohne Weiteres geläufig. Fig. 6 illustriert eine Ausführungsform, bei dem kein Konditionieren erforderlich ist, da das Ausgangsmaterial bereits über eine geeignete Anfangs-Feuche verfügt. In Fig. 5 ist angedeutet, dass eine abschliessende Vermahlung stattfinden kann; selbstverständlich sind dem Fachmann geeignete Verfahren zum Vermahlen geläufig und bedürfen hier keiner weiteren Erläuterung. Ferner ist es möglich, wie in Figur 6 angedeutet, die erfindungsgemäss abgekühlten Produkte in an sich bekannter Art und Weise zu flockieren, bspw. in Flockierwalzwerken; dies kann vor (wie gezeigt) oder auch (bevorzugt) nach dem abschliessenden Trocknen erfolgen. Eine abschliessende Vermahlung ist auch in solchen Verfahrensvarianten möglich. In Fig. 6 ist ein Ablaufschema gezeigt mit den identischen Verfahrensschritten, wie in Anspruch 1 dargelegt.

## Patentansprüche

1. Verfahren zum Behandeln eines stärkehaltigen Lebensmittels, insbesondere von Cerealien und Pseudoceralien sowie beliebigen Kombinationen daraus, wobei das stärkehaltige Lebensmittel während des Verfahrens Zustände an der Oberfläche durchläuft, die verschiedene Wertepaare aus Temperatur (T) der Oberfläche und Feuchtigkeit (U) der Oberfläche aufweisen, umfassend die folgenden Schritte:
- Bereitstellen eines stärkehaltigen Lebensmittels mit einem Anfangs-Feuchtegehalt im Bereich von 20% wb bis 35 % wb, bevorzugt von 21% wb bis 30 % wb und besonders bevorzugt von 22% wb bis 25 % wb;
- Temperieren des stärkehaltigen Lebensmittels, so dass ein Gelatinisierungsgrad von zumindest 75%, bevorzugt von zumindest 80% und besonders bevorzugt im Bereich von 85% bis 99% erreicht wird, insbesondere auf eine Temperatur T über der Temperatur T_{g end} der Glasübergangskurve bezogen auf die Feuchtigkeit (U) des stärkehaltigen Lebensmittels;
- Abkühlen zumindest eines Teils und insbesondere der gesamten Oberfläche des temperierten, stärkehaltigen Lebensmittels auf eine Temperatur T, die unter der Temperatur T_{g mittel} der Glasübergangskurve bezogen auf die Feuchtigkeit (U) des stärkehaltigen Lebensmittels liegt, für eine Dauer im Bereich von 1 min bis 4 min, insbesondere von 1 min bis 2 min;
- Trocknen des abgekühlten, stärkehaltigen Lebensmittels bei einer Temperatur T, die über der Temperatur T_{g onset}, bevorzugt zwischen der Temperatur T_{g onset} und der Temperatur T_{g end}, der Glasübergangskurve bezogen auf die Feuchtigkeit (U) des stärkehaltigen Lebensmittels liegt, insbesondere auf eine Endfeuchte im Bereich von 10 % wb bis 14 % wb, bevorzugt von 10% wb bis 12 % wb.

2. Verfahren nach Anspruch 1, **dadurch gekennzeichnet, dass** während des Temperierens das stärkehaltige Lebensmittel zumindest für 80% und bevorzugt für zumindest 90% der Dauer die Temperatur T über der Temperatur T_{g end} aufweist.

3. Verfahren nach Anspruch 1 oder 2, **dadurch gekennzeichnet, dass** das Temperieren des stärkehaltigen Lebensmittels zumindest abschnittsweise bei einer Temperatur T zwischen 70 und 120 °C, bevorzugt zwischen 80 und 100 °C und besonders bevorzugt zwischen 90 und 95°C erfolgt.

4. Verfahren nach Anspruch 1 oder 3, **dadurch gekennzeichnet, dass** während des Trocknens das abgekühlte, stärkehaltige Lebensmittel zumindest für 80% und bevorzugt für zumindest 90% der Dauer die Temperatur T über der Temperatur T_{g onset} aufweist.

5. Verfahren nach Anspruch 1 oder 2, **dadurch gekennzeichnet, dass** das Trocknen des abgekühlten, stärkehaltigen Lebensmittels bei einer Temperatur T von höchstens 80°C, bevorzugt 40°C und besonders bevorzugt von 20° C über der Temperatur T_{g onset} der Glasübergangskurve bezogen auf die Feuchtigkeit (U) des stärkehaltigen Lebensmittels erfolgt.

6. Verfahren nach einem der Ansprüche 1 bis 5, **dadurch gekennzeichnet, dass** das temperierte, stärkehaltige Lebensmittel vor dem Abkühlen flockiert und /oder gesiebt wird, insbesondere flockiert auf eine Dicke im Bereich von 0.25 mm bis 1.50 mm, bevorzugt von 0.4 mm bis 0.6 mm.

7. Verfahren nach einem der Ansprüche 1 bis 6, **dadurch gekennzeichnet, dass** das der Schritt des Bereitstellens des stärkehaltigen Lebensmittels ein Konditionieren auf die gewünschte Anfangs-Feuchte umfasst.

8. Verfahren nach einem der Ansprüche 1 bis 7, **dadurch gekennzeichnet, dass** das stärkehaltige Lebensmittel vor dem Bereitstellen zumindest mittels einem der folgenden Verfahren oder beliebige Kombinationen daraus behandelt wird: Reinigen, Schälen, Entkeimen, Zerkleinern.

9. Verfahren nach einem der Ansprüche 1 bis 8, **dadurch gekennzeichnet, dass** dem stärkehaltigen Lebensmittel vor dem Temperieren zumindest ein Additiv, insbesondere zumindest ein Emulgator, ein Enzym oder beliebige Kombinationen daraus, zugemischt werden.

10. Verfahren nach einem der Ansprüche 1 bis 9, **dadurch gekennzeichnet, dass** dem getrockneten, stärkehaltigen Lebensmittel zumindest ein Nährstoff, ein Protein, Stärke oder beliebige Kombinationen daraus zugemischt werden.

11. Verfahren nach einem der Ansprüche 1 bis 10, **dadurch gekennzeichnet, dass** das getrocknete, stärkehaltige Lebensmittel zu Griess und / oder Mehl vermahlen und optional gesiebt wird, insbesondere zur Einstellung einer mittleren Grössenverteilung der Partikel, bevorzugt einer mittleren Grösse von grösser 200 µm, besonders bevorzugt im Bereich von 400 µm bis 500 µm.

12. Schnellkochbares, stärkehaltiges Lebensmittel (1) herstellbar, insbesondere hergestellt, mittels eines Verfahrens gemäss einem der Ansprüche 1 bis 11.

13. Schnellkochbares, stärkehaltiges Lebensmittel (1), insbesondere gemäss Anspruch 12, **gekennzeichnet durch** eine Kochzeit von kleiner als 4 min, bevorzugt kleiner als 2 min, wobei ein Gelstabilitätsindex grösser 100 g, bevorzugt grösser 150 g, besonders bevorzugt grösser 200 g und ganz besonders bevorzugt grösser 250 g erzielt wird, insbesondere bei einer mittleren Grössenverteilung der Partikel im Bereich von 400 µm bis 500 µm.

14. Lebensmittel (1) gemäss Anspruch 13, **gekennzeichnet durch** eine End-Viskosität von grösser 3200 cPoise, bevorzugt grösser 6000 cPoise und besonders bevorzugt grösser 8000 cPoise, insbesondere bei einer mittleren Grössenverteilung der Partikel im Bereich von 400 µm bis 500 µm.

15. Verwendung eines schnellkochbaren, stärkehaltigen Lebensmittels gemäss einem der Ansprüche 12 bis 14 zur Herstellung eines abgepackten Lebensmittelprodukts (10).
